# EUROPEAN PATENT APPLICATION

(11) **EP 4 825 476 A1**
(43) Date of publication of application: **21.10.2026**
(21) Application number: 24904281.3
(22) Date of filing: 13.12.2024
(51) Int. Cl.: B01D 61/52, B01D 61/46, B01D 61/42, C02F 1/469

(54) **SPACER FOR ELECTRODIALYSIS SYSTEM AND ELECTRODIALYSIS SYSTEM COMPRISING SAME**

(30) Priority: 15.12.2023 KR 20230183699
(71) Applicant: POSCO Holdings Inc., Pohang-si, Gyeongsangbuk-do 37859 (KR)
(72) Inventor: CHOI, Jaehyug, Pohang-si, Gyeongsangbuk-do 37859 (KR); KANG, Chanhyeok, Pohang-si, Gyeongsangbuk-do 37859 (KR); KIM, Hye Jeong, Pohang-si, Gyeongsangbuk-do 37859 (KR); KIM, Kyunghoon, Pohang-si, Gyeongsangbuk-do 37859 (KR); LEE, Sihwa, Pohang-si, Gyeongsangbuk-do 37859 (KR); MYEONG, Wan Jae, Pohang-si, Gyeongsangbuk-do 37859 (KR)
(74) Representative: Pfenning, Meinig & Partner mbB
(86) International application number: PCT/KR2024/020318
(87) International publication number: WO 2025/127716

(57) **Abstract**

A spacer for an electrodialysis system according to the present invention comprises: a first end portion; a second end portion positioned to face the first end portion; and a central portion disposed between the first end portion and the second end portion, wherein the spacer has a trapezoidal shape in which the second end portion is wider than the first end portion.

## Description

### [TECHNICAL FIELD]

The present invention relates to a spacer for an electrodialysis system and an electrodialysis system including the same.

### [BACKGROUND ART]

As the era of electric vehicles has arrived, the lithium-ion battery industry has been rapidly growing, and accordingly, demand for lithium as a battery material has been continuously increasing.

Commercial production of lithium is broadly divided into a method of extracting lithium from ore and a method of producing lithium from brine. Most of the lithium produced from ore is produced from spodumene concentrate by a sulfuric acid process. Lithium produced from brine is mainly produced from underground brine in South America through natural drying, removal of by-products, and additional processes. In the future, as electric vehicles become more widely distributed, it is expected that the proportion of recycled lithium used in lithium-ion battery production by re-extracting lithium from waste batteries will gradually increase.

Meanwhile, lithium intermediates used for manufacturing battery materials have previously been mainly in the form of lithium carbonate. However, as extending the driving distance of electric vehicles has emerged as a major technical issue, demand for high-power-density batteries has increased, and demand for lithium hydroxide, which is a raw material for high-power-density battery materials, has been rapidly increasing.

Lithium hydroxide is mainly produced by a lime process in which lithium carbonate and calcium hydroxide are reacted. Recently, however, attention has been drawn to processes for directly preparing lithium hydroxide from intermediates such as lithium sulfate, lithium chloride, and lithium phosphate without passing through lithium carbonate.

Representative processes for directly preparing lithium hydroxide from ore include a causticization process in which lithium hydroxide is prepared by reacting sodium hydroxide with a lithium sulfate solution and sodium sulfate is generated as a by-product, and a bipolar electrodialysis (BPED) process in which a lithium hydroxide solution is treated by electrodialysis to separate lithium hydroxide and sulfuric acid. The bipolar electrodialysis process is an economical and environmentally friendly process because it does not use auxiliary raw materials such as sodium hydroxide and reuses sulfuric acid for treatment of spodumene concentrate, thereby generating no by-products.

A bipolar electrodialysis system includes an anion exchange membrane and a cation exchange membrane, and a spacer is disposed between the anion exchange membrane and the cation exchange membrane. The spacer serves to secure a flow path, reduce differential pressure, and secure a space to prevent contact between ion exchange membranes, thereby increasing electrochemical potential.

In an electrodialysis system, when stagnation occurs in a flow between ion exchange membranes due to impurities or the like, inflow of ions into a stagnation section decreases, and a CP (viscosity) modulus changes. When ion concentration is locally reduced, ion transfer efficiency may decrease due to a reduction in an effective membrane utilization area of ion exchange membranes, spacers, and the like, and problems may somewhat occur in that membranes such as ion exchange membranes and spacers are damaged due to generation of electrical resistance heat.

Accordingly, there is a need to develop an electrodialysis system capable of improving ion exchange performance.

### [DETAILED DESCRIPTION OF THE INVENTION]

### [Technical Problem]

The present invention is intended to provide a spacer for an electrodialysis system, which can improve ion exchange performance by generating a strong flow velocity.

In addition, the present invention is intended to provide an electrodialysis system having excellent ion transfer efficiency and suppressing generation of electrical resistance heat.

### [Technical Solution]

The present invention provides a spacer for an electrodialysis system, comprising: a first end portion; a second end portion positioned to face the first end portion; and a central portion disposed between the first end portion and the second end portion, wherein the spacer has a trapezoidal shape in which the second end portion is wider than the first end portion.

In addition, the present invention provides an electrodialysis system comprising: a positive electrode; a negative electrode positioned to face the positive electrode; cation exchange membranes and anion exchange membranes alternately installed between the positive electrode and the negative electrode; and the above-described spacer for an electrodialysis system interposed between the cation exchange membrane and the anion exchange membrane.

### [Advantageous Effects]

The spacer for an electrodialysis system according to the present invention has an advantage of improving ion exchange performance by generating a strong flow velocity.

In addition, the spacer for an electrodialysis system according to the present invention has advantages of excellent ion transfer efficiency and suppressing generation of electrical resistance heat.

### [BRIEF DESCRIPTION OF THE DRAWINGS]

FIG. 1 is a view illustrating a spacer for an electrodialysis system according to some embodiments of the present invention.

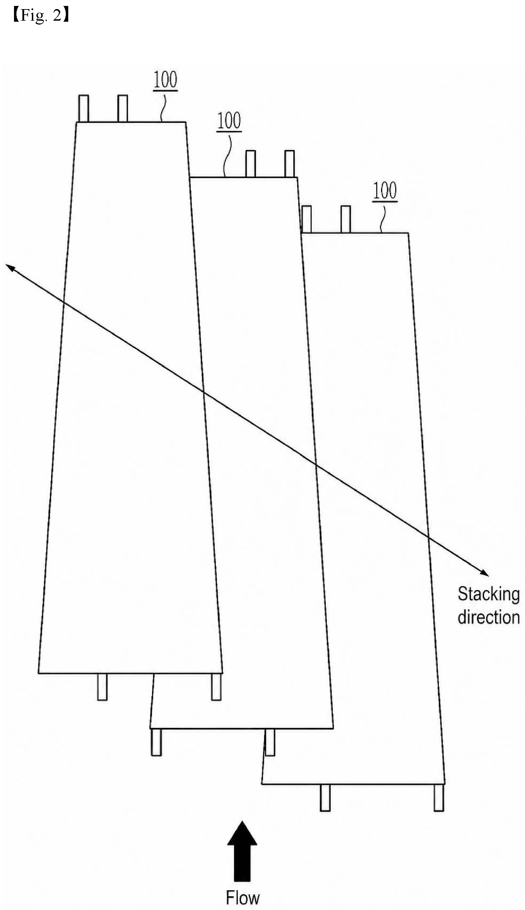

FIG. 2 is a view illustrating a case in which a plurality of spacers for an electrodialysis system according to some embodiments of the present invention are stacked.

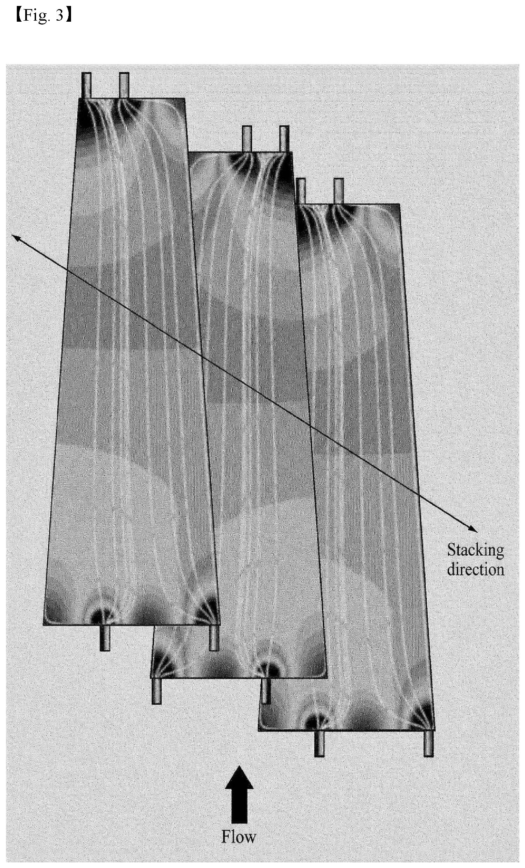

FIG. 3 is a view showing predicted flow analysis when a plurality of spacers for an electrodialysis system according to some embodiments of the present invention are stacked.
FIG. 4 is a view showing flow analysis of a spacer for an electrodialysis system according to some embodiments of the present invention and a velocity distribution of a solution in a width direction depending on position.
FIG. 5 is a view showing flow analysis of a spacer for an electrodialysis system according to a Comparative Example and a velocity distribution of a solution in a width direction depending on position.
FIGS. 6 and 7 are views showing standard deviations of flow velocity at positions from 10% to 90% of the total height with respect to a width direction of spacers for an electrodialysis system according to an Example and a Comparative Example, respectively.

### [MODE FOR CARRYING OUT THE INVENTION]

Hereinafter, embodiments of the present invention will be described in detail. However, these are provided as examples, and the present invention is not limited thereto, and the present invention is only defined by the scope of the claims to be described below.

In the present invention, when a member is referred to as being positioned "on" another member, this includes not only a case in which the member is in direct contact with the other member, but also a case in which another member is interposed between the two members.

In the present invention, when a part is referred to as "comprising" a certain component, this means that other components may be further included, rather than excluding other components, unless specifically stated to the contrary.

### <Spacer for Electrodialysis System>

One aspect of the present invention relates to a spacer 100 for an electrodialysis system, comprising: a first end portion 10; a second end portion 20 positioned to face the first end portion 10; and a central portion disposed between the first end portion 10 and the second end portion 20, wherein the spacer has a trapezoidal shape in which the second end portion 20 is wider than the first end portion 10.

Since the spacer 100 for an electrodialysis system according to the present invention has a trapezoidal shape, it can generate a stronger flow velocity than a conventional rectangular spacer, thereby suppressing occurrence of stagnation in a flow between ion exchange membranes of a cation exchange membrane and an anion exchange membrane, and accordingly increasing ion transfer efficiency.

The spacer 100 for an electrodialysis system according to the present invention includes the first end portion 10 and the second end portion 20 positioned to face the first end portion 10.

At this time, the second end portion 20 has a length greater than that of the first end portion 10.

The expression that the first end portion 10 and the second end portion 20 are positioned to face each other means that the first end portion 10 and the second end portion 20 are opposed to each other.

Specifically, the first end portion 10 and the second end portion 20 may refer to the upper base and the lower base, respectively, of the trapezoid.

In another embodiment of the present invention, the spacer 100 for an electrodialysis system may include an outlet 11 for treated water to be described below.

In general, the outlet 11 for treated water may have somewhat lower ion exchange performance than the central portion.

A conventional rectangular spacer has a uniform flow velocity in a width direction, and a deviation of the flow velocity in the width direction is also formed left-right symmetrically. This causes a decrease in overall ion exchange performance at the outlet 11 for treated water, where ion exchange performance is relatively poor.

In contrast, since the spacer 100 for an electrodialysis system according to the present invention has a trapezoidal shape, a strong flow velocity can be generated at the outlet 11 for treated water relative to the same flow rate. Accordingly, ion exchange is actively performed, and a difference in ion concentration is also generated greatly with the spacer 100 for an electrodialysis system interposed therebetween, thereby improving performance of the entire system.

In addition, in a process in which ions move through a membrane by application of electricity, the temperature may increase more at an upper side of the spacer, that is, the first end portion 10, than at a lower side of the spacer, that is, the second end portion 20. Accordingly, a uniform flow can be formed by forming the first end portion narrower than the second end portion 20.

In another embodiment of the present invention, the size of base angles A and A' of the second end portion 20 may be 70° to 86°.

In another embodiment of the present invention, the size of the base angles A and A' of the second end portion 20 may be 80° to 86°.

When the size of the base angles A and A' of the second end portion 20 satisfies the above range, flow resistance is formed in response to an increased flow velocity toward the first end portion 10, thereby forming a uniform flow field even up to an edge portion of the spacer 100 for an electrodialysis system, which is preferable.

In another embodiment of the present invention, the sizes of the two base angles A and A' of the second end portion 20 may be different from each other.

In another embodiment of the present invention, the sizes of the two base angles A and A' of the second end portion 20 may be the same.

Specifically, the spacer 100 for an electrodialysis system according to the present invention may be a symmetrical trapezoid or an asymmetrical trapezoid.

In short, the two base angles A and A' of the second end portion 20 may have different angles or the same angle.

Preferably, the spacer 100 for an electrodialysis system may have two base angles A and A' having the same angle.

When the two base angles A and A' of the spacer 100 for an electrodialysis system have the same angle, there is an advantage in terms of ease of system assembly and management, which is preferable.

In another embodiment of the present invention, the length of the first end portion 10 may be 30% to 90% of the length of the second end portion 20.

In another embodiment of the present invention, the length of the first end portion 10 may be 40% to 60% of the length of the second end portion 20.

When the length of the first end portion 10 satisfies the above range relative to the length of the second end portion 20, the intended ion exchange performance is excellent, and problems in which the spacer 100 for an electrodialysis system is damaged by the flow velocity, differential pressure, or the like of treated water can be suppressed, which is preferable.

The second end portion 20 may have a length of 300 mm to 1,500 mm, but is not limited thereto.

The length of the first end portion 10 may be selected to satisfy the above ratio relative to the length of the second end portion 20.

The spacer for electrodialysis according to the present invention may have a thickness of 0.3 mm to 2.0 mm, preferably 0.3 mm to 1.2 mm, and more preferably 0.6 mm to 1.0 mm, but is not limited thereto.

However, when the thickness of the spacer for electrodialysis satisfies the above range, the thickness of the spacer for electrodialysis can be minimized while deformation of the spacer for electrodialysis can be suppressed, which is preferable. In addition, a gradient of ion concentration is formed across the entire thickness, which is preferable because ion exchange performance is improved.

The spacer for electrodialysis according to the present invention may have a height of 500 mm to 1,500 mm, preferably 700 mm to 1,500 mm, and more preferably 1,220 mm to 1,500 mm, but is not limited thereto.

When the height of the spacer for electrodialysis satisfies the above range, a gradient of ion concentration is formed in an overall length (height) direction, which is preferable because ion exchange performance is improved.

The outlet 11 for treated water may be formed on the first end portion 10 side.

In addition, the spacer for electrodialysis according to the present invention may include an inlet 21 for treated water formed on the second end portion 20 side.

A uniform flow can be formed because an effective cross-sectional area in the length direction of the spacer for electrodialysis becomes smaller toward the outlet 11 for treated water.

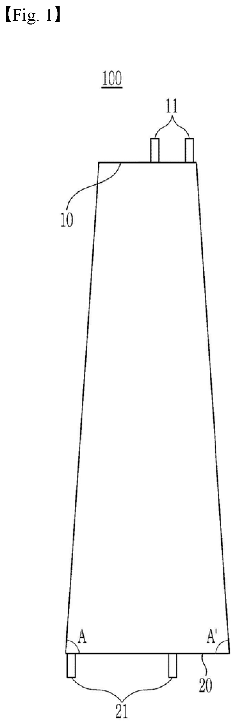

The outlet 11 for treated water may be disposed to be offset in a direction perpendicular to the length direction of the spacer for electrodialysis, that is, in the width direction. For example, the outlet 11 for treated water may be provided on a right side of the first end portion 10, and the inlet 21 for treated water may be provided on a left side of the second end portion 20. Referring to FIG. 1, reference numeral 11 represents an outlet, and reference numeral 21 represents an inlet.

The central portion may serve to provide a compartment in which ions in a solution move by a positive electrode (+) and a negative electrode (-).

The central portion may include a mesh region, a nonwoven fabric having openings, or the like.

In another embodiment of the present invention, the central portion may include a mesh region.

The shape of the mesh region is not particularly limited in the present invention.

In another embodiment of the present invention, the mesh region may include one or more patterns selected from the group consisting of a circular shape, an elliptical shape, a rectangular shape, a parallelogram shape, a diamond shape, and a net shape.

Specifically, the mesh region may include a uniform lattice structure having a diamond shape.

In the present invention, a method for manufacturing the spacer for electrodialysis is not limited. For example, the spacer for electrodialysis may be manufactured using injection molding or a method of drawing a polymer material into a thread form and weaving the same.

The spacer for electrodialysis may be manufactured using a non-conductive polymer material such as Teflon, but is not limited thereto.

The spacer for electrodialysis according to the present invention can improve ion exchange performance by controlling a physical shape without being limited by material.

Since the spacer for electrodialysis according to the present invention has a trapezoidal shape in which the second end portion 20 is wider than the first end portion 10, a fast flow velocity can be forcibly formed at the outlet 11 for treated water, where ion exchange performance is relatively low. Accordingly, stagnation in a flow due to a pinhole phenomenon caused by impurities or the like can be suppressed, and ion exchange performance can be improved.

The spacer for electrodialysis according to the present invention can be usefully applied to a reverse osmosis system (RO; Reverse Osmosis), a bipolar electrodialysis system (BPED; Bipolar Electrodialysis), and the like.

### <Electrodialysis System>

Another aspect of the present invention relates to an electrodialysis system comprising: a positive electrode; a negative electrode positioned to face the positive electrode; cation exchange membranes and anion exchange membranes alternately installed between the positive electrode and the negative electrode; and the above-described spacer 100 for an electrodialysis system interposed between the cation exchange membrane and the anion exchange membrane.

The electrodialysis system according to the present invention has an advantage of excellent ion exchange performance.

The positive electrode may include a substrate including titanium (Ti), tantalum (Ta), nickel (Ni), or a similar metal.

A surface of the substrate may be coated with a non-deactivatable electrocatalytic film, but is not limited thereto.

For example, the surface of the substrate may be coated with an oxide of platinum (Pt), iridium (Ir), rhodium (Rh), ruthenium (Ru), zirconium (Zr), titanium (Ti), or similar metals, or a conductive (discharge) material including at least one of the above-mentioned metal oxides.

For example, the film may be formed by coating an organic compound including at least one of the above-mentioned metals (for example, iridium alcoholate, ruthenium alcoholate, tantalum alcoholate, or titanium alcoholate, wherein the alcohol used herein may be methanol, ethanol, propanol, butanol, isopropanol, isobutanol, or the like) on a surface of the metallic substrate, and a sintering process for removing organic components may be subsequently performed, but the present invention is not limited thereto.

The negative electrode may include nickel, iron, stainless steel, nickel-plated titanium, graphite, carbon steel, or a combination thereof, but is also not limited thereto.

The positive electrode may be included in a positive electrode cell, and the negative electrode may be included in a negative electrode cell.

An acidic solution tank may be further disposed outside the positive electrode cell, and a basic solution tank may be further disposed outside the negative electrode cell.

The cation exchange membrane has an anionic group therein and selectively allows only cations to pass therethrough.

Specifically, the cation exchange membrane may be a membrane composed of negatively charged ion groups, which allows cations such as Na⁺, K⁺, Ca²⁺, Mg²⁺, and Fe²²⁺ to pass therethrough and does not allow anions such as Cl⁻, Br⁻, NO₃⁻, SO₄²⁻, and HCO₃⁻ to pass therethrough due to repulsion of the same charge.

The cation exchange membrane may have a thickness of 70 µm to 170 µm, preferably 75 µm to 150 µm, and more preferably 80 µm to 120 µm, but is not limited thereto.

The cation exchange membrane may include a plurality of inlets, and the diameter and the like of the inlets are not limited in the present invention.

The anion exchange membrane has a cationic group therein and selectively allows only anions to pass therethrough.

Specifically, the anion exchange membrane may be a membrane composed of positively charged ion groups, which allows anions such as Cl⁻, Br⁻, NO₃⁻, SO₄²⁻, and HCO₃⁻ to pass therethrough and does not allow cations such as Na⁺, K⁺, Ca²⁺, Mg²⁺, and Fe²²⁺ to pass therethrough due to repulsion of the same charge.

The anion exchange membrane may have a thickness of 70 µm to 170 µm, preferably 75 µm to 150 µm, and more preferably 80 µm to 120 µm, but is not limited thereto.

The anion exchange membrane may include a plurality of inlets, and the diameter and the like of the inlets are not limited in the present invention.

A plurality of the cation exchange membranes and the anion exchange membranes may be included, and the spacer for electrodialysis may be interposed between the plurality of cation exchange membranes and the anion exchange membranes.

In another embodiment of the present invention, when a plurality of the spacers for electrodialysis are included, outlets 11 for treated water of the plurality of spacers for electrodialysis may be disposed to be offset from each other.

In another embodiment of the present invention, the outlets 11 for treated water of the plurality of spacers for electrodialysis may be disposed to be offset from each other in a horizontal direction.

Specifically, the spacers for electrodialysis disposed closest to each other may be disposed in a form in which they are flipped 180° in a horizontal direction from each other, such that the outlets 11 for treated water may be disposed to be offset from each other.

By disposing the outlets 11 for treated water of the plurality of spacers for electrodialysis to be offset from each other in the horizontal direction, portions having a large flow velocity can be alternately disposed and stacked, which is preferable because ion exchange performance can be further improved.

Preferably, all of the plurality of spacers for electrodialysis may be disposed to be offset from one another.

The electrodialysis system according to the present invention may further include a bipolar membrane, a gasket, and the like, but is not limited thereto.

Specifically, the electrodialysis system according to the present invention may be a reverse osmosis system (RO; Reverse Osmosis) or a bipolar electrodialysis system (BPED; Bipolar Electrodialysis), but is not limited thereto.

Hereinafter, preferred Examples and Comparative Examples of the present invention will be described. However, the following Examples are merely preferred embodiments of the present invention, and the present invention is not limited to the following Examples.

### Example

Computational analysis was performed by modeling a spacer having a trapezoidal shape in which the length of the first end portion was 250 mm, the length of the second end portion was 420 mm, the height was 1,220 mm, and both base angles were 86° (using COMSOL software). At this time, the central portion was formed as a mesh having a diamond-shaped pattern, and analysis was performed under three-dimensional steady-state conditions.

### Comparative Example

Computational analysis was performed by modeling a spacer having a rectangular shape with a width of 420 mm and a length of 1,220 mm using the same software as in the Example. At this time, the same mesh as in the Example was applied to the central portion.

### Experimental Example

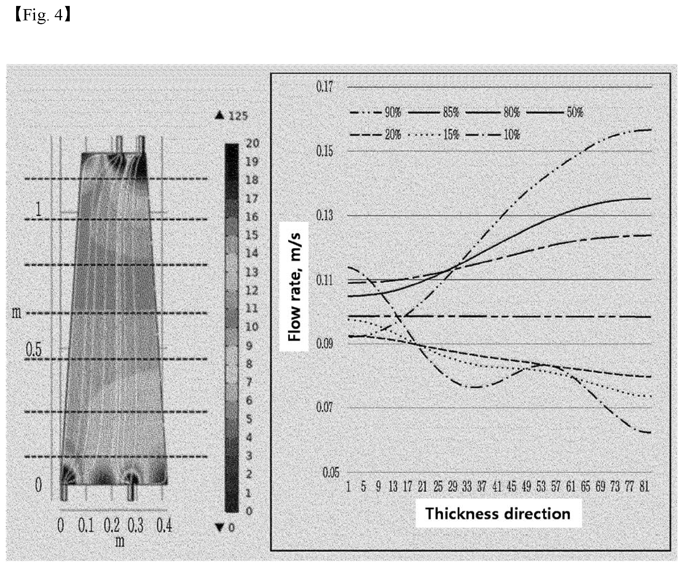

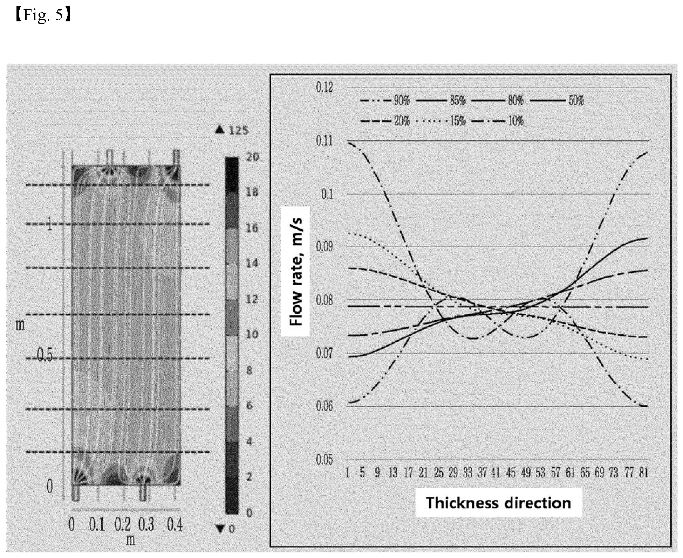

Flow analysis of the spacers manufactured according to the Example and the Comparative Example was performed (using COMSOL software), and results are shown in FIGS. 4 and 5, respectively.

The left images of FIGS. 4 and 5 are views showing flow analysis representing velocities and vectors of a solution passing through the spacer, and the right images are views showing velocity distributions of the solution in the width direction of the spacer.

Specifically, a standard deviation of a solution velocity according to the width direction at the outlet of treated water of the spacers modeled according to the Example and the Comparative Example was predicted (using COMSOL software), and the results are shown in FIGS. 4 and 5, respectively.

More specifically, the standard deviation of the solution velocity was calculated as a standard deviation value of flow velocities at 83 equally spaced points in the width direction of the spacer (based on the second end portion in the case of the Example). This calculation was performed by designating, with respect to the height of the spacer, seven flow-direction heights indicated by dotted lines as 10%, 15%, 20%, 50%, 80%, and 90%, starting from the second end portion, and calculating deviation of velocity at each position in the width direction. It can be seen that the standard deviation of velocity is greatest when approaching the outlet corresponding to 90% of the total height.

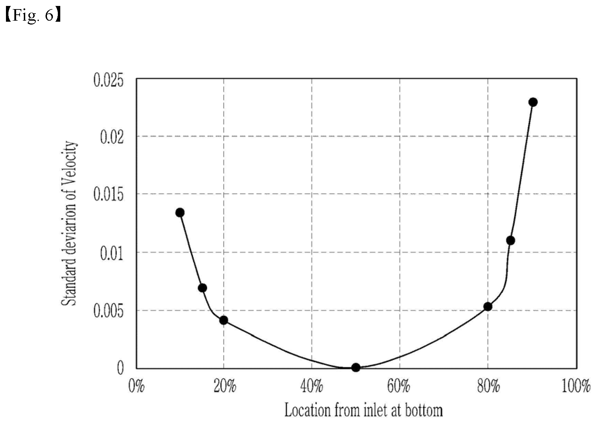

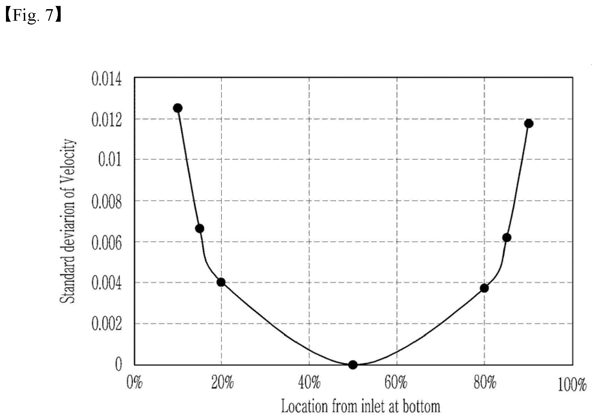

FIGS. 6 and 7 show standard deviations of flow velocity at specific heights (10% to 90%) with respect to a width direction of the spacers for an electrodialysis system according to the Example and the Comparative Example, respectively.

Referring to FIGS. 5 and 7, it can be seen that the spacer for an electrodialysis system according to the Comparative Example has a uniform flow velocity in the width direction, and a deviation of the flow velocity in the width direction is also formed left-right symmetrically. This causes a decrease in overall ion exchange performance at the outlet where ion exchange performance is poor. In addition, when the spacer for an electrodialysis system according to the Comparative Example was used, the flow velocity had a maximum value of about 0.1 m/s, and the velocity deviation was 0.013 m/s.

In contrast, referring to FIGS. 4 and 6, when the spacer manufactured according to the Example was used, it can be seen that the flow velocity had a maximum value of 0.155 m/s, showing a local increase in flow velocity of 50% or more, and that the velocity deviation was 0.023 m/s, showing an improvement of about 77%.

The present invention is not limited to the above Examples and may be manufactured in various different forms. A person having ordinary skill in the art to which the present invention pertains will understand that the present invention may be embodied in other specific forms without changing the technical spirit or essential features of the present invention. Therefore, the above-described Examples should be understood as illustrative in all respects and not restrictive.

### [Description of Reference Numerals]

10: first end portion
11: outlet
20: second end portion
21: inlet
100: spacer for electrodialysis system

## Claims

1. A spacer for an electrodialysis system, comprising:
a first end portion;
a second end portion positioned to face the first end portion; and
a central portion disposed between the first end portion and the second end portion,
wherein the spacer has a trapezoidal shape in which the second end portion is wider than the first end portion.

2. The spacer for an electrodialysis system of claim 1,
wherein a base angle of the second end portion is 70° to 86°.

3. The spacer for an electrodialysis system of claim 2,
wherein the base angle of the second end portion is 80° to 86°.

4. The spacer for an electrodialysis system of claim 1,
wherein two base angles of the second end portion are different from each other.

5. The spacer for an electrodialysis system of claim 1,
wherein two base angles of the second end portion are the same.

6. The spacer for an electrodialysis system of claim 1,
wherein a length of the first end portion is 30% to 90% of a length of the second end portion.

7. The spacer for an electrodialysis system of claim 6,
wherein the length of the first end portion is 40% to 60% of the length of the second end portion.

8. The spacer for an electrodialysis system of claim 1,
wherein the spacer has a height of 500 mm to 1,500 mm.

9. The spacer for an electrodialysis system of claim 1,
wherein the central portion comprises a mesh region.

10. The spacer for an electrodialysis system of claim 9,
wherein the mesh region comprises one or more patterns selected from the group consisting of a circular shape, an elliptical shape, a rectangular shape, a parallelogram shape, a diamond shape, and a net shape.

11. The spacer for an electrodialysis system of claim 1,
wherein the spacer comprises an outlet for treated water.

12. An electrodialysis system, comprising:
a positive electrode;
a negative electrode positioned to face the positive electrode;
cation exchange membranes and anion exchange membranes alternately installed between the positive electrode and the negative electrode; and
the spacer for an electrodialysis system according to any one of claims 1 to 11, interposed between the cation exchange membrane and the anion exchange membrane.

13. The electrodialysis system of claim 12,
wherein, when a plurality of the spacers for electrodialysis are included, outlets for treated water of the plurality of spacers are disposed to be offset from each other.

14. The electrodialysis system of claim 13,
wherein the outlets for treated water of the plurality of spacers are disposed to be offset from each other in a horizontal direction.
